# EUROPEAN PATENT APPLICATION

(11) **EP 4 852 521 A1**
(43) Date of publication of application: **09.12.2026**
(21) Application number: 25767157.8
(22) Date of filing: 12.02.2025
(51) Int. Cl.: H04W 36/00

(54) **COMMUNICATION METHOD AND APPARATUS, AND STORAGE MEDIUM**

(30) Priority: 07.03.2024 CN 202410262254
(71) Applicant: Datang Mobile Communications Equipment Co., Ltd., Beijing 100085 (CN)
(72) Inventor: ZHOU, Rui, Beijing 100085 (CN); ZENG, Erlin, Beijing 100085 (CN); XU, Meng, Beijing 100085 (CN)
(74) Representative: Ipsilon
(86) International application number: PCT/CN2025/076935
(87) International publication number: WO 2025/185414

(57) **Abstract**

The present disclosure relates to a communication method and apparatus, and a storage medium and a computer program product. The method comprises: receiving a target message sent by a network-side device, wherein the target message includes access assistance information, the access assistance information is used for assisting a terminal in cell access, and the access assistance information at least includes cell identification information; and performing conditional LTM handover processing on the basis of the access assistance information. By using the method, a network side can provide access-related information of a cell to a terminal side in advance, and upon detecting that an execution condition for a conditional LTM handover is met, a terminal can immediately execute the conditional LTM handover on the basis of the information received in advance, thereby simplifying the network access procedure, improving the efficiency of the terminal for executing the conditional LTM handover, shortening a delay of the conditional LTM handover, and guaranteeing the stability and real-time performance of communication between the terminal and a network.

## Description

### CROSS-REFERENCE

This application claims priority to Chinese Patent Application No. 202410262254.4, titled "Communication Method and Apparatus, Communication Device and Storage Medium", filed on March 7, 2024, the entire contents of which are incorporated herein by reference.

### TECHNICAL FIELD

The present disclosure relates to the field of communication technologies, and in particular, to a communication method, a communication apparatus, a storage medium and a computer program product.

### BACKGROUND

L1/L2 triggered mobility (LTM) has been introduced in NR mobility. Specifically, the network pre-configures LTM candidate cell configuration information and LTM L1 measurement configuration information for the user equipment (UE), and the UE performs L1 measurement of a candidate cell based on the LTM L1 measurement configuration information and reports an LTM L1 measurement result to the network. Based on the L1 measurement result information reported by the UE, the network performs cell switch decision, and if the network determines that cell switch is required, the network sends a cell switch command to the UE through a medium access control control element (MAC CE). The cell switch MAC CE carries identification information of a target cell. Upon reception of the cell switch MAC CE, the UE performs cell switch and accesses the target cell.

In the related art, conditional LTM switch is autonomously triggered by the terminal side. In execution of the conditional LTM switch, the terminal needs to perform a random access to the target cell to obtain parameters such as a timing advance (TA). As a result, the conditional LTM switch has a relatively long delay.

### SUMMARY

In view of the above, the present disclosure provides a communication method, a communication apparatus, a storage medium and a computer program product.

In a first aspect, the present disclosure provides a communication method, which is applied to a terminal, including:
receiving a target message sent by a network side device, the target message including access assistance information, the access assistance information being used for assisting the terminal in performing cell access, and the access assistance information at least including cell identification information; and
performing a conditional L1/L2 triggered mobility (LTM) switch based on the access assistance information.

In some embodiments, the target message is a target medium access control control element (MAC CE) message, the access assistance information further includes type indication information, and performing the conditional LTM switch based on the access assistance information includes:
storing access assistance information of a candidate cell locally in response to determining, based on the type indication information, that the access assistance information is for providing the access assistance information of the candidate cell; and
performing the conditional LTM switch based on the locally stored access assistance information to access a target cell in a case where an access condition is met.

In some embodiments, performing the conditional LTM switch based on the locally stored access assistance information to access the target cell in the case where the access condition is met includes:
accessing the target cell based on the cell identification information and the communication parameter included in the access assistance information of the target cell in a case where the target cell meeting an execution condition of the conditional LTM switch exists and the access assistance information of the target cell is found locally, where the communication parameter at least includes one of an uplink access timing advance, beam information and a random access resource.

In some embodiments, the access assistance information further includes a use condition; and accessing the target cell based on the cell identification information and the communication parameter included in the access assistance information of the target cell includes:
determining the communication parameter meeting the use condition; and
accessing the target cell based on identification information of the target cell and the communication parameter meeting the use condition.

In some embodiments, the use condition includes a use condition corresponding to a target communication parameter, and the target communication parameter includes the beam information and/or the random access resource.

In some embodiments, accessing the target cell based on the cell identification information and the communication parameter included in the access assistance information of the target cell includes:
determining the uplink access timing advance included in the access assistance information of the target cell;
determining the target communication parameter meeting the use condition corresponding to the target communication parameter; and
accessing the target cell based on the cell identification information of the target cell, the uplink access timing advance, and the target communication parameter meeting the use condition corresponding to the target communication parameter.

In some embodiments, the communication parameter includes the uplink access timing advance, the beam information and the random access resource; and
accessing the target cell based on the cell identification information and the communication parameter included in the access assistance information of the target cell includes:
determining the uplink access timing advance included in the access assistance information of the target cell;
determining the beam information meeting a use condition corresponding to the beam information;
determining the random access resource meeting a use condition corresponding to the random access resource; and
accessing the target cell based on the cell identification information of the target cell, the uplink access timing advance, the beam information meeting the use condition corresponding to the beam information, and the random access resource meeting the use condition corresponding to the random access resource.

In some embodiments, the use condition is a signal threshold-based use condition or a time threshold-based use condition.

In some embodiments, the target MAC CE messages is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

In some embodiments, the target message is an extended LTM cell switch command MAC CE message, the target message includes access assistance information of a target cell, the access assistance information further includes a communication parameter and type indication information, and performing the conditional LTM switch based on the access assistance information includes:
accessing the target cell based on the cell identification information and the communication parameter included in the access assistance information of the target cell in a case of determining that the type indication information is for instructing the terminal to perform cell switch.

In some embodiments, the target message is a newly configured MAC CE message, the target message includes access assistance information for a target cell, the access assistance information further includes a communication parameter and type indication information, and performing the conditional LTM switch based on the access assistance information includes:
accessing the target cell based on the cell identification information and the communication parameter included in the access assistance information of the target cell in a case of determining that the type indication information is for instructing the terminal to perform cell switch.

In a second aspect, the present disclosure provides a communication method, which is applied to a network side device, including:
sending a target message, where the target message includes access assistance information and the access assistance information at least includes cell identification information.

In some embodiments, the target message is a target MAC CE message, the target MAC CE message is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

In a third aspect, the present disclosure provides a communication apparatus, which is applied to a terminal, including:
a first receiving unit, configured to receive a target message sent by a network side device, the target message including access assistance information, the access assistance information being used for assisting the terminal in performing cell access, and the access assistance information at least including cell identification information; and
a first processing unit, configured to perform a conditional LTM switch based on the access assistance information.

In a fourth aspect, the present disclosure provides a communication apparatus, which is applied to a network side device, including:
a first sending unit, configured to send a target message, where the target message includes access assistance information, the access assistance information is used for assisting a terminal in performing cell access, and the access assistance information at least includes cell identification information, to enable the terminal to perform a conditional LTM switch based on the access assistance information.

In a fifth aspect, the present disclosure provides a communication apparatus, including:
a memory for storing a computer program; a transceiver for transceiving data under control of a processor; and the processor for reading the computer program in the memory and performing:
receiving a target message sent by a network side device, where the target message includes access assistance information, the access assistance information is used for assisting the terminal in performing cell access, and the access assistance information at least includes cell identification information; and performing a conditional LTM switch based on the access assistance information.

In a sixth aspect, the present disclosure provides a communication apparatus, including:
a memory for storing a computer program; a transceiver for transceiving data under control of a processor; and the processor for reading the computer program in the memory and performing:
sending a target message, where the target message includes access assistance information and the access assistance information at least includes cell identification information.

In a seventh aspect, the present disclosure provides a communication device, including:
a memory for storing a computer program; a transceiver for transceiving data under control of a processor; and the processor for reading the computer program in the memory and performing the steps of the communication method according to any of the foregoing embodiments.

In an eighth aspect, the present disclosure provides a computer-readable storage medium having a computer program stored thereon, where the computer program, when executed by a processor, implements the steps of the communication method according to any of the foregoing embodiments.

In a ninth aspect, the present disclosure further provides a computer program product including a computer program, where the computer program, when executed by a processor, implements the steps of the communication method according to any of the foregoing embodiments.

In the foregoing, there have discussed the communication method, the communication apparatus, the storage medium and the computer program product. The method includes: receiving the target message sent by the network side device, where the target message includes the access assistance information, the access assistance information is used for assisting the terminal in performing cell access, and the access assistance information at least includes the cell identification information; and performing a conditional LTM switch based on the access assistance information. With such method, a network side can provide access-related information of the cell for a terminal side in advance, and the terminal can execute the conditional LTM switch immediately based on the information received in advance when detecting that the execution condition of the conditional LTM switch is met, thereby simplifying the network access process, improving the efficiency of execution of the conditional LTM switch by the terminal and the performance of the conditional LTM switch, reducing the delay of the conditional LTM switch, and ensuring stability and real-time performance of the communication between the terminal and the network.

The above description is only an overview of the technical solution of the present disclosure. In order to better understand the technical means of the present disclosure, it can be implemented in accordance with the contents of the specification, and in order to make the above and other objects, features, and advantages of the present disclosure more clearly understand, specific implementations of the present disclosure are given below.

### BRIEF DESCRIPTION OF THE DRAWINGS

Various other advantages and effects will become apparent to those skilled in the art based on embodiments as explicitly detailed hereinafter. The drawings are only for purpose of illustrating the embodiments but shall not be construed as limitations to the present disclosure. The same reference numerals used throughout the drawings denote the same part. Among the drawings:
FIG. 1 illustrates an application environment for a communication method according to an embodiment of the present disclosure;
FIG. 2 is a schematic flowchart of a communication method according to the embodiment of the present disclosure;
FIG. 3 is a schematic flowchart of a communication method according to the embodiment of the present disclosure;
FIG. 4 is a schematic flowchart of a communication method according to the embodiment of the present disclosure;
FIG. 5 is a schematic flowchart of a communication method according to the embodiment of the present disclosure;
FIG. 6 is a schematic flowchart of a communication method according to the embodiment of the present disclosure;
FIG. 7 is a schematic flowchart of a communication method according to an embodiment of the present disclosure;
FIG. 8 schematically illustrates an MAC CE message in R18 in an embodiment of the present disclosure;
FIG. 9 is a structural block diagram of a communication apparatus according to an embodiment of the present disclosure;
FIG. 10 is another structural block diagram of a communication apparatus according to an embodiment of the present disclosure; and
FIG. 11 is a structural block diagram of a communication device according to an embodiment of the present disclosure.

### DETAILED DESCRIPTION

The embodiments of the technical solutions of the present disclosure will be described in detail below with reference to the accompanying drawings. The following embodiments are only used to illustrate the technical solutions of the present disclosure more clearly, and are therefore only used as examples, and cannot be used to limit the protection scope of the present disclosure.

Unless defined otherwise, all technical and scientific terms used herein have the same meaning as commonly understood by one of ordinary skill in the art to which this disclosure belongs; the terminology used herein is for the purpose of describing particular embodiments only and is not intended to be limiting of the disclosure; the terms "including", "having" and any variations thereof in the description and claims of the present disclosure and in the preceding description of the drawings are intended to cover a non-exclusive inclusion.

In the description of the embodiments of the present disclosure, the technical terms such as "first", "second", or the like, are only used for distinguishing different objects, and are not intended to indicate or imply relative importance or significance or to imply the number, specific sequence or primary and secondary relationship of indicated technical features. In the description of the embodiments of the present disclosure, "multiple" means two or more, unless otherwise clearly and specifically limited.

Reference herein to "embodiment" means that a particular feature, structure, or characteristic described in connection with the embodiment may be included in at least one embodiment of the present disclosure. The appearances of this phrase in various places in the specification are not necessarily all referring to the same embodiment, nor referring to separate or alternative embodiments mutually exclusive of other embodiments. It is explicitly and implicitly understood by those skilled in the art that the embodiments described herein can be combined with other embodiments.

In the description of the embodiments of the present disclosure, the term "and/or" herein only describes an association relationship between associated objects, and indicates that three relationships may exist. For example, A and/or B may indicate three cases: only A exists; both A and B exist; and only B exists. In addition, the character "/" herein generally indicates an "or" relationship between the associated objects.

In the description of the embodiments of the present disclosure, the term "multiple" means more than two (including two); similarly, "multiple groups" means more than two groups (including two groups), and "multiple sheets" means more than two sheets (including two sheets).

In descriptions of the embodiments of the present disclosure, directions or positional relationships indicated by technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the embodiments of the present disclosure and for description simplicity, but do not indicate or imply that an indicated apparatus or element must have a specific orientation or be constructed and operated in a specific orientation. Therefore, it cannot be understood as a limitation on the embodiments of the present disclosure.

In the description of the embodiments of the present disclosure, unless specified or limited otherwise, the technical terms "mounted", "connected", "coupled", and "fixed" and the like are used broadly, and may be, for example, fixed connections, detachable connections, or integral connections; may also be mechanical or electrical and/or communication connections; may also be direct connections or indirect connections via intervening structures; may also be communication or an interaction relationship of two elements. For those of ordinary skill in the art, the specific meanings of the above terms in the embodiments of the present disclosure can be understood on case-by-case.

A communication method and a communication apparatus are provided according to embodiments of the present disclosure, in which a network side device sends access assistance information to a terminal in advance, and the terminal can accordingly execute conditional LTM switch. Thus, communication between the terminal and the network side device can be achieved based on the access assistance information received by the terminal, which is sent by the network side device in advance. The method and the apparatus are based on the same inventive concept, so they have similar problem-resolving principles. Accordingly, implementations of the apparatus and the method can be understood with reference to each other, and similar parts are not repeated herein.

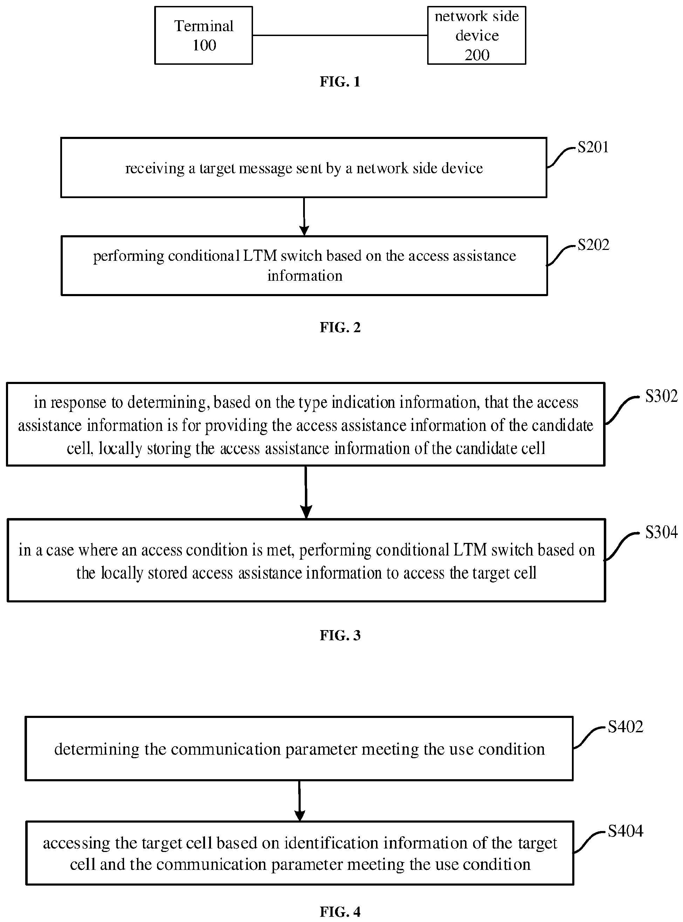

FIG. 1 shows a schematic architecture diagram of a communication system according to an embodiment of the present disclosure. As shown in FIG. 1, the communication system architecture may include the following logical network elements: a terminal 100 and a network side device 200. The terminal 100 may be user equipment (UE). The terminal 100 can access the network side device 200; optionally, the network side device 200 may include multiple cells, and correspondingly, the terminal 100 can access the cells included in the network side device 200. Under an R19 mobility enhancement topic of the 3rd generation partnership project (3GPP), the terminal may support conditional LTM switch, which is different from R18 LTM in that the conditional LTM switch is triggered by the terminal, and a network does not send a command to trigger the LTM switch. With the communication architecture and the communication method according to the embodiments of the present disclosure, the terminal 100 may acquire information related to network access of a target cell in advance, that is, acquire access assistance information related to the target cell in advance, and when the terminal 100 determines that an execution condition of the conditional LTM switch is currently met, based on the locally stored access assistance information related to the target cell (for example, an uplink timing advance (TA), etc.) and acquired in advance, access to the target cell is implemented, that is, access to the network side device 200 is implemented.

Before a specific embodiment of the present disclosure is described, terms mentioned in the embodiments are explained:
LTM: layer 1/layer 2 (L1/L2) triggered mobility;
LTM switch: LTM candidate cell configuration information and LTM L1 measurement configuration information are pre-configured for UE, the UE performs L1 measurement of a candidate cell based on the LTM L1 measurement configuration information and reports an LTM L1 measurement result to a network, the network performs cell switch decision based on the L1 measurement result information reported by the UE, and if the network determines that cell switch is required, the network sends a cell switch command to the UE through a medium access control control element (MAC CE), the cell switch MAC CE carries identification information of a target cell, and when the UE receives the cell switch MAC CE, the UE performs cell switch to access the target cell;
Conditional LTM switch: the terminal executes conditional LTM switch when determining that an execution condition of the conditional LTM switch is met;
TA: uplink access timing advance;
LTM cell switch command MAC CE message;
MAC CE: medium access control control element.

It should be understood that the communication system architecture in FIG. 1 merely illustrates an example of a possible application environment for the solution of the present disclosure. Those skilled in the art will appreciate that the embodiments of the present disclosure can be applied to the communication system architecture of FIG. 1 or a similar communication system architecture thereto. The solution of the embodiment of the present disclosure can also be suited for communication architectures obtained by appropriate modifications and changes made on the basis of the communication system architecture of FIG. 1.

The technical solution provided by the embodiment of the present disclosure can be suitable for various systems. For example, the suitable systems may be long term evolution (LTE) systems, LTE frequency division duplex (FDD) systems, LTE time division duplex (TDD) systems, long term evolution advanced (LTE-A) systems, universal mobile telecommunication systems (UMTS), worldwide interoperability for microwave access (WiMAX) systems, 5G new radio (NR) systems, evolution communication systems thereof, or the like. These systems may include terminal devices and network devices. The system may further include a core network part such as an evolved packet system (EPS) and a 5G System (5GS).

The terminal device related in the embodiment of the present disclosure may be a terminal Internet of Things (IoT) device or a cellular Internet of Things (CIoT) device; and may also be a device providing voice and/or data connectivity for a user, a handheld device having a wireless connection function, other processing devices connected to a wireless modem, or the like. The name of the terminal device may be different in different systems. For example, in a 5G system, the terminal device may be referred to as user equipment (UE). A wireless terminal device may be a USB storage device, other personal computer memory devices, and encryption dogs, or can be communicated with one or more core networks (CNs) via a radio access network (RAN), and the wireless terminal device may be a mobile terminal device, such as a mobile telephone (or "cellular" telephone) and a computer having a mobile terminal device, e.g., a portable, pocket, handheld, computer-built-in or vehicle-mounted mobile apparatus, and may exchange languages and/or data with the RAN. Examples of the device include personal communication service (PCS) phones, cordless phones, session initiation protocol (SIP) phones, wireless local loop (WLL) stations, personal digital assistants (PDAs), personal computers, tablet computers, machine-type communication (MTC) terminal devices, etc. The wireless terminal device may also be referred to as a system, a subscriber unit, a subscriber station, a mobile station, a mobile, a remote station, an access point, a remote terminal, an access terminal, a user terminal, a user agent, a user device, radio access apparatuses and routers/modems satisfying limitations of the definition, etc., which is not limited in the embodiments of the present disclosure.

The network side device related in the embodiment of the present disclosure may be a base station, and the base station may include a plurality of cells for serving the terminal. The base station may also be called an access point, or a device in the access network that is communicated with the wireless terminal device over an air interface through one or more sectors, or other names, depending on particular application occasions. The network device may be configured to exchange received air frames with Internet protocol (IP) packets as a router between the wireless terminal device and the rest of the access network, which may include an IP communication network. The network device may also coordinate attribute management for the air interface. For example, the network device related in the embodiment of the present disclosure may be an evolved network device (evolutional Node B, eNB or e-NodeB) in a Long Term Evolution (LTE) system, a 5G base station (gNB) in a 5G network architecture (next generation system), a home evolved base station (Home evolved Node B, HeNB), a relay node, a home base station (femto), a pico base station (pico), a network test device, etc., which is not limited in the embodiment of the present disclosure. In some network structures, the network device may include centralized unit (CU) nodes and distributed unit (DU) nodes, which may be geographically separated.

The terminal device in the embodiments of the present disclosure sends related information or similar descriptions to the network side device, which only indicates that the terminal device sends the related information in a wireless signal manner. An intended receiving party is the network side device, and the network side device can obtain the related information by receiving the wireless signal.

In an exemplary embodiment, a communication method is provided. Description is given with an example that the method is applied to the terminal shown in FIG. 1. As shown in FIG. 2, the communication method may include following steps.

Step 202 includes: receiving a target message sent by a network side device.

Optionally, the target message includes access assistance information. The access assistance information is used for assisting the terminal in performing cell access, and the access assistance information at least includes cell identification information. The cell identification information may be identification information of a candidate cell, or identification information of a target cell. The network side device may send the target message including the access assistance information to the terminal, and the terminal may perform conditional LTM switch based on the target message.

Step 204 includes: performing conditional LTM switch based on the access assistance information.

Optionally, upon reception of the target message including the access assistance information, the terminal may perform conditional LTM switch based on the access assistance information included in the target message, which can provide a communication basis for the terminal to access the network subsequently.

Optionally, a serving cell may send the target message to the terminal device. In response to receiving the target message sent by the serving cell, the terminal may perform conditional LTM switch based on the access assistance information included in the target message.

In the communication method, the target message sent by the network side device is received, the target message includes the access assistance information, the access assistance information is used for assisting the terminal in performing cell access, and the access assistance information at least includes the cell identification information; conditional LTM switch is performed based on the access assistance information. With such method, a network side can provide access-related information of the cell for a terminal side in advance, and the terminal can execute the conditional LTM switch immediately based on the information received in advance when detecting that the execution condition of the conditional LTM switch is met, thereby simplifying the network access process, improving the efficiency of execution of the conditional LTM switch by the terminal and the performance of the conditional LTM switch, reducing the delay of the conditional LTM switch, and ensuring stability and real-time performance of the communication between the terminal and the network.

In an embodiment, the target message is a target MAC CE message. The target MAC CE message may be a message obtained by extending an LTM cell switch command MAC CE message, or a newly configured MAC CE message. Obtaining of the newly configured MAC CE message does not depend on any communication process. Optionally, the target MAC CE message may also be a newly configured RCC message, or the like. The access assistance information in the target MAC CE message also includes type indication information, where the type indication information is used for instructing the terminal to perform a processing operation of the conditional LTM switch, and the processing operation of the conditional LTM switch matches the content of the type indication information.

Optionally, the type indication information may be used to indicate a use of the access assistance information. For example, the type indication information may be used to instruct the terminal to perform the conditional LTM switch. The type indication information may also be used to indicate to the terminal that the received access assistance information is for providing access assistance information of the candidate cell or access assistance information of the target cell.

Correspondingly, as shown in FIG. 3, the step of performing conditional LTM switch based on the access assistance information may include following steps.

Step 302 includes: in response to determining, based on the type indication information, that the access assistance information is for providing the access assistance information of the candidate cell, locally storing the access assistance information of the candidate cell.

Optionally, the terminal may determine the use of the current access assistance information based on the type indication information in the access assistance information. If the terminal determines, based on the type indication information, that the access assistance information is for providing the access assistance information of the candidate cell or the access assistance information of the target cell, the terminal may save the received access assistance information, for example, the terminal may save the access assistance information locally.

Step 304 includes: in a case where an access condition is met, performing conditional LTM switch based on the locally stored access assistance information to access the target cell.

The access condition may be a process that the terminal performs determination based on an execution condition of the conditional LTM switch and the locally stored access assistance information of each candidate cell.

Optionally, the terminal may perform determination based on the access condition. If determining that the access condition is currently met, the terminal performs conditional LTM switch based on the locally stored access assistance information, and the terminal accesses the target cell.

In the embodiment, types of information included in the access assistance information are extended. For example, the access assistance information may include the type indication information used for indicating the use of the access assistance information, and the terminal may determine the use of the access assistance information based on the type indication information, and perform timely processing on the access assistance information, thus ensuring validity of the access assistance information, and providing a data basis for subsequent network access by the terminal.

In an embodiment, the access assistance information further includes a communication parameter. Optionally, the terminal may access the network by using the communication parameter. The communication parameter includes one or more of: an uplink access timing advance (TA), beam information, and a random access resource.

Correspondingly, the step of in a case where an access condition is met, performing conditional LTM switch based on the locally stored access assistance information to access the target cell may include:
if there exists a target cell that meets the execution condition of the conditional LTM switch and the access assistance information of the target cell is found locally, accessing the target cell based on the cell identification information and the communication parameter included in the access assistance information of the target cell.

Optionally, after the terminal locally stores the access assistance information of one candidate cell or locally stores respective pieces of access assistance information of multiple candidate cells, the terminal may evaluate whether the execution condition of the conditional LTM switch is met currently, and after determining that the target cell meeting the execution condition of the conditional LTM switch exists, the terminal may inquire whether the access assistance information for the target cell is stored locally based on the locally stored access assistance information of the one candidate cell or the locally stored respective pieces of access assistance information of the multiple candidate cells. If the terminal locally finds the access assistance information of the target cell, the terminal can access the target cell based on the cell identification information and the communication parameter included in the access assistance information of the target cell.

In an example, the execution condition of the conditional LTM switch may be a condition for the terminal to determine whether cell switch needs to be performed currently. The terminal may perform a local query based on the identification information of the target cell, and determine whether the target cell exists in the received access assistance information. If the target cell exists in the received access assistance information, the terminal may determine that the access condition is currently met, and accordingly, the terminal may access the target cell by using the communication parameter included in the target cell and based on the identification information of the target cell.

In the embodiment, the network side device may provide the access-related information of the cell for the terminal side in advance, and after determining that the execution condition of the conditional LTM switch is met, the terminal may access the network in time based on the locally stored access assistance information, thus avoiding interacting with the network side device again to obtain the communication parameter after the execution condition of the conditional LTM switch is triggered, reducing the delay of the conditional LTM switch, simplifying a process of the conditional LTM switch, and improving the efficiency of the conditional LTM switch.

In an embodiment, the communication parameter at least includes one of the uplink access timing advance, the beam information, and the random access resource.

Optionally, the communication parameter included in the access assistance information may include one or more of the uplink access timing advance, the beam information, and the random access resource. A person skilled in the art may determine the type of specific information carried by the communication parameter in the access assistance information based on an actual application scenario. Optionally, the communication parameter is not limited to the uplink access timing advance, the beam information, and the random access resource, and other types of communication parameters may be included.

In the embodiment, types of the communication parameters included in the access assistance information are enriched, and multiple realizable communication manners are provided for network access of the terminal. The terminal can access the network by using the multiple communication manners corresponding to the communication parameters, thus ensuring the stability and reliability of the communication between the terminal and the network.

In an embodiment, the access assistance information further includes a use condition. Optionally, the use condition is utilized to determine the communication parameter used by the terminal in a process of accessing the network side device. The use condition may be a use condition corresponding to the communication parameter. For example, in a case where the communication parameter includes the beam information, the use condition may be a use condition corresponding to the beam information; and in a case where the communication parameter includes the random access resource, the use condition may be a use condition corresponding to the random access resource. Different communication parameters may correspond to different use conditions, or may correspond to an identical use condition.

Correspondingly, as shown in FIG. 4, the step of accessing the target cell based on the cell identification information and the communication parameter included in the access assistance information of the target cell may include following steps.

Step 402 includes: determining the communication parameter meeting the use condition.

Optionally, the terminal may perform evaluation based on a communication parameter included in the access assistance information and a use condition corresponding to the communication parameter, to determine the communication parameter that meets the use condition. That is, the terminal evaluates a communication parameter according to a use condition corresponding to the type of the communication parameter, so as to select and determine the communication parameter that meets the use condition corresponding to the type of the communication parameter.

Step 404 includes: accessing the target cell based on identification information of the target cell and the communication parameter meeting the use condition.

Optionally, the terminal may access the target cell by using the communication parameter meeting the use condition based on the identification information of the target cell.

In the embodiment, the types of the information included in the access assistance information are further enriched, an evaluation basis is provided for selection of the communication parameters by the terminal, and the terminal can filter the communication parameters used when the terminal accesses the network, thus further improving stability of network access of the terminal, and improving the efficiency of the communication between the terminal and the network.

In an embodiment, the use condition includes a use condition corresponding to a target communication parameter, and the target communication parameter may be a communication parameter having a use condition. For example, the target communication parameter includes the beam information and/or the random access resource. In other words, the communication parameter in the access assistance information may include the beam information, or may include the random access resource, or may include both the beam information and the random access resource. Optionally, the access assistance information may further include the use condition.

In an example, in a case where the communication parameter in the access assistance information includes a beam condition, the use condition may include a use condition corresponding to the beam condition; and in a case where the communication parameter in the access assistance information includes the random access resource, the use condition may include a use condition corresponding to the random access resource.

Optionally, the target communication parameter may be a communication parameter having a use condition. For instance, the target communication parameter may include the beam information, and accordingly, the use condition may be the use condition corresponding to the beam information. Alternatively, the target communication parameter may be the random access resource, and correspondingly, the use condition may be the use condition corresponding to the random access resource. Else, the target communication parameters may include the beam information and the random access resource, and corresponding use conditions include the use condition corresponding to the beam information and the use condition corresponding to the random access resource. Optionally, the target communication parameter may include other types of communication parameters, and the types of the target communication parameters are not limited in the embodiments of the present disclosure.

Optionally, if the terminal determines that the target cell meeting the execution condition of the conditional LTM switch exists and the access assistance information of the target cell is locally found, the terminal may evaluate the target communication parameter in the access assistance information according to the use condition, so as to obtain the target communication parameter meeting the use condition. Thus, the terminal can access the target cell by using the target communication parameter meeting the use condition.

In an embodiment, the communication parameter may include the beam information. If the terminal determines that the target cell meeting the execution condition of the conditional LTM switch exists and the access assistance information of the target cell is locally found by the terminal, the terminal may perform processing operations of the conditional LTM switch, and the processing operations may specifically include the following: the terminal evaluates the beam information according to the use condition corresponding to the beam information, and in a case of determining that the beam information meets the use condition corresponding to the beam information, the terminal can access the target cell by using the beam information meeting the use condition. Similarly, the communication parameter may include the random access resource, or include both the beam information and the random access resource, and corresponding specific processing operations, which are similar to those in the case where the communication parameter only includes the beam information, are not repeated herein.

In the embodiment, specific contents of the use condition are specified, and the terminal may evaluate the communication parameters through the use condition, and access the target cell by using the communication parameter meeting the use condition, thereby further improving the stability of network access of the terminal.

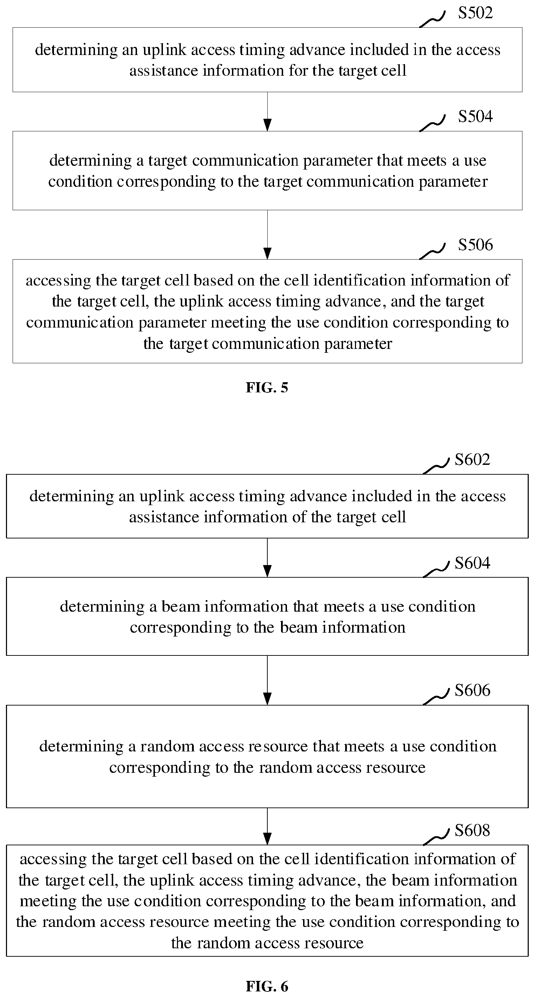

In an embodiment, as shown in FIG. 5, the step of accessing the target cell based on the cell identification information and the communication parameter included in the access assistance information of the target cell may include following steps.

Step 502 includes: determining an uplink access timing advance included in the access assistance information for the target cell.

Optionally, the terminal may analyze the access assistance information, and extract the uplink access timing advance carried by the access assistance information.

Step 504 includes: determining a target communication parameter that meets a use condition corresponding to the target communication parameter.

The target communication parameter may be a communication parameter having a corresponding use condition.

Optionally, if the terminal acquires a use condition corresponding to a target communication parameter from the access assistance information, the terminal may evaluate the target communication parameter according to the use condition corresponding to the target communication parameter, so as to determine the target communication parameter that meets the use condition.

Step 506 includes: accessing the target cell based on the cell identification information of the target cell, the uplink access timing advance, and the target communication parameter meeting the use condition corresponding to the target communication parameter.

Optionally, the terminal may access the target cell based on the identification information of the target cell, the uplink access timing advance included in the terminal assistance information, and the determined target communication parameter that meets the use condition corresponding to the target communication parameter.

It should be noted that the present disclosure does not limit the execution sequence of the above step 502, step 504 and step 506, the terminal may execute the above step 502, step 504 and step 506 at the same time, or execute the step 502, step 504 and step 506 in sequence, and those skilled in the art may specifically determine the sequence based on the actual application scenario.

In the embodiment, when the communication parameters included in the access assistance information are of multiple types, the terminal directly determines the communication parameters and may determine the target communication parameter that meets the use condition, and implements access to the network by using the communication parameters, thereby ensuring the stability of the communication.

In an embodiment, the communication parameter may include an uplink access timing advance, a beam information and a random access resource, and the target communication parameter includes the beam information and the random access resource.

Correspondingly, as shown in FIG. 6, the step of accessing the target cell based on the cell identification information and the communication parameter included in the access assistance information for the target cell may include following steps.

Step 602 includes: determining an uplink access timing advance included in the access assistance information of the target cell.

Optionally, the terminal may analyze the access assistance information, and extract the uplink access timing advance carried by the access assistance information.

Step 604 includes: determining a beam information that meets a use condition corresponding to the beam information.

The use condition corresponding to the beam information may be a signal threshold-based use condition a or a time threshold-based use condition.

Optionally, the terminal may evaluate the beam information according to the use condition corresponding to the beam information, and determine the beam information that meets the use condition corresponding to the beam information.

In an example, the terminal may determine the beam information that meets the signal threshold-based use condition, or may determine the beam information that meets the time threshold-based use condition.

Step 606 includes: determining a random access resource that meets a use condition corresponding to the random access resource.

The terminal may evaluate the random access resource according to the use condition corresponding to the random access resource, and determine the random access resource that meets the use condition corresponding to the random access resource.

In an example, the terminal may determine the random access resource that meets a signal threshold-based use condition, or may determine the random access resource that meets a time threshold-based use condition.

Step 608 includes: accessing the target cell based on the cell identification information of the target cell, the uplink access timing advance, the beam information meeting the use condition corresponding to the beam information, and the random access resource meeting the use condition corresponding to the random access resource.

Optionally, the terminal may access the target cell based on the identification information of the target cell, the uplink access timing advance included in the terminal assistance information, the determined beam information meeting the use condition, and the determined random access resource meeting the use condition.

It should be noted that the present disclosure does not limit the execution sequence of the above step 602, step 604 and step 606, the terminal may execute the above step 602, step 604 and step 606 at the same time, or execute the step 602, step 604 and step 606 in sequence, and those skilled in the art may specifically determine the execution sequence of the above steps based on the actual application scenario.

In the embodiment, when the communication parameters included in the access assistance information are of multiple types, the terminal directly determines the communication parameters and may determine the target communication parameter that meets the use condition, and implements access to the network by using the communication parameters, thereby ensuring the stability of the communication.

In an embodiment, a use condition is a signal threshold-based use condition or a time threshold-based use condition.

Optionally, for the signal threshold-based use condition, a process in which the terminal determines the communication parameter meeting the signal threshold-based use condition may specifically be as follows: the terminal determines a signal threshold of the use condition through the signal threshold-based use condition, and the terminal can determine a communication parameter with a signal strength stronger than the signal threshold and determine the communication parameter stronger than the signal threshold as the communication parameter meeting the signal threshold-based use condition. Hence, the terminal may perform the conditional LTM switch based on the communication parameter stronger than the signal threshold, and access the target cell.

Optionally, the communication parameter may be the beam information, and in the case where the use condition is the signal threshold-based use condition, the terminal may determine the beam information with a signal strength stronger than the signal threshold, and access the target cell based on the beam information with the signal strength stronger than the signal threshold.

In another embodiment, the use condition may be a time threshold -based use condition, and a process in which the terminal determines the communication parameter meeting the time threshold-based use condition may specifically be as follows: the terminal determines a signal threshold and a time threshold of the use condition through the time threshold-based use condition; the terminal can determine a communication parameter with a signal strength stronger than the signal threshold, and after determining that a maintenance time of the communication parameter with the signal strength stronger than the signal threshold is longer than the time threshold, the terminal determines the communication parameter as the communication parameter meeting the time threshold-based use condition. In this way, the terminal can perform the conditional LTM switch using the communication parameter and access the target cell.

In the embodiment, the terminal may determine the communication parameter used by the terminal to access the network through the signal threshold-based use condition or the time threshold-based use condition, so as to provide a data basis for stable communication between the terminal and the network.

In an embodiment, a target MAC CE message is an extended LTM cell switch command MAC CE message, and each target MAC CE message includes the access assistance information of one candidate cell.

The LTM cell switch command MAC CE message can be a cell change command sent from the network side device to the terminal. The network side device may extend the MAC CE message, which is originally used for instructing the terminal to perform LTM cell switch, and write the access assistance information of a single candidate cell into the LTM cell switch command MAC CE message to obtain the extended LTM cell switch command MAC CE message, and then send the extended LTM cell switch command MAC CE message as the target MAC CE message to the terminal.

In an example, among the extended LTM cell switch command MAC CE messages sent by the network side device to the terminal, each extended LTM cell switch command MAC CE message only carries the access assistance information of a single candidate cell. The network side device may send multiple extended LTM cell switch command MAC CE messages to the terminal, and thus the terminal can obtain pieces of access assistance information of multiple candidate cells.

In the embodiment, the network side device may extend the LTM cell switch command MAC CE message, and write the access assistance information of the candidate cell into the LTM cell switch command MAC CE message, and the network side device sends the access assistance information of each cell related to network access to the terminal in advance depending on an LTM cell switch command, so that the terminal can access the network in time based on the locally stored access assistance information for the cell after determining that the conditional LTM switch is met, thereby reducing the delay of network access of the terminal and ensuring timeliness of communication.

In an embodiment, the target MAC CE message is a newly configured MAC CE message, and the target MAC CE message includes the access assistance information of one candidate cell or pieces of access assistance information of multiple candidate cells.

The newly configured MAC CE message may be reconfigured by the network side device, and is not dependent on a communication message of any communication process. The target MAC CE message may be a newly configured RRC message, or the like. The network side device may perform a message configuration operation, write the access assistance information of a single candidate cell or pieces of access assistance information of multiple candidate cells into the newly configured MAC CE message to obtain the target MAC CE message, and send the target MAC CE message to the terminal.

In an example, each newly configured MAC CE message sent by the network side device to the terminal may carry the access assistance information of a single candidate cell or pieces of access assistance information of multiple candidate cells.

In the embodiment, the network side device may newly configure the MAC CE message, and write the access assistance information of the candidate cell into the newly configured MAC CE message, so that the network side device can simultaneously send the access assistance information of multiple cells related to network access to the terminal in advance, thereby improving a sending efficiency of the access assistance information for the network, and further improving a performance.

In an embodiment, the target message is an extended LTM cell switch command MAC CE message, the target message includes access assistance information of a target cell, and the access assistance information includes a communication parameter and type indication information. In this case, performing conditional LTM switch based on the access assistance information includes:
in a case of determining that the type indication information is for instructing the terminal to perform cell switch, accessing the target cell based on cell identification information and the communication parameter included in the access assistance information of the target cell.

Optionally, the terminal may receive the extended LTM cell switch command MAC CE message sent by the network side device, and analyze the extended LTM cell switch command MAC CE message to obtain the access assistance information. The terminal may determine the use of the current access assistance information according to the type indication information in the access assistance information, and if the terminal determines, according to the type indication information, that the access assistance information is used for instructing the terminal to perform conditional LTM, the terminal may access the target cell based on the cell identification information and the communication parameter in the access assistance information.

In the embodiment, the content of the type indication information in the access assistance information is enriched, the access assistance information may directly carry the type indication information indicating cell switch, and the terminal may access the network based on the received access assistance information, thereby further simplifying the network access process of the terminal and reducing the delay of network access of the terminal.

In an embodiment, the target message is a newly configured MAC CE message, the target message includes access assistance information of a target cell, and the access assistance information includes a communication parameter and type indication information. In this case, performing conditional LTM switch based on the access assistance information includes:
in a case of determining that the type indication information is for instructing the terminal to perform cell switch, accessing the target cell based on cell identification information and the communication parameter included in the access assistance information of the target cell.

Optionally, the terminal may receive the newly configured MAC CE message sent by the network side device, and analyze the newly configured MAC CE message to obtain the access assistance information. The terminal may determine the use of the current access assistance information according to the type indication information in the access assistance information, and if the terminal determines, according to the type indication information, that the access assistance information is used for instructing the terminal to perform conditional LTM, the terminal may access the target cell based on the cell identification information and the communication parameter in the access assistance information.

In the embodiment, the content of the type indication information is further extended, the access assistance information may directly carry the type indication information indicating cell switch, and the terminal may access the network based on the received access assistance information, thereby further simplifying the network access process of the terminal and reducing the delay of network access of the terminal.

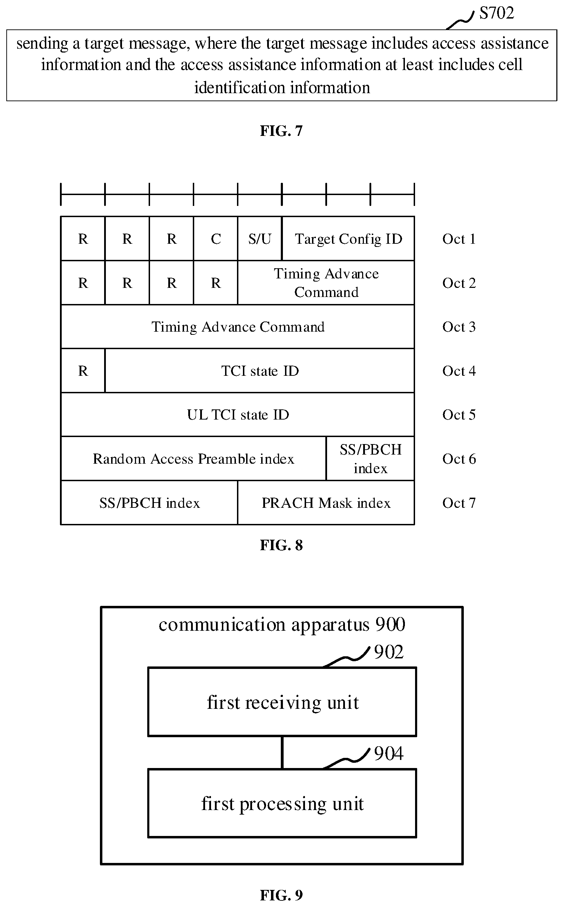

In an exemplary embodiment, a communication method is provided. It is described with an example that the method is applied to the network side device shown in FIG. 1. As shown in FIG. 7, the communication method may include:
step 702: sending a target message.

The target message includes access assistance information. The access assistance information is used for assisting a terminal in performing cell access. The access assistance information at least includes cell identification information. The terminal performs conditional LTM switch based on the access assistance information.

Optionally, the network side device may generate the target message including the access assistance information, and send the target message to the terminal. Upon reception of the target message including the access assistance information, the terminal may perform conditional LTM switch based on the access assistance information included in the access assistance information, so as to provide a communication basis for the terminal to access the network side device subsequently.

In the embodiment, a network side can provide access-related information of a cell for a terminal side in advance, and the terminal can execute the conditional LTM switch immediately based on the information received in advance when detecting that the execution condition of the conditional LTM switch is met, thereby simplifying the network access process, improving the efficiency of execution of the conditional LTM switch by the terminal, reducing the delay of the conditional LTM switch, and ensuring stability and real-time performance of communication between the terminal and the network side device.

In an embodiment, the target message is a target MAC CE message, and the target MAC CE message is an extended LTM cell switch command MAC CE message. Each target MAC CE message includes the access assistance information of one candidate cell.

The LTM cell switch command MAC CE message may be a cell change command sent from the network side device to the terminal. The network side device may extend the MAC CE message which is originally used for instructing the terminal to perform LTM cell switch, write the access assistance information of a single candidate cell into the LTM cell switch command MAC CE message to obtain an extended LTM cell switch command MAC CE message, take the extended LTM cell switch command MAC CE message as the target MAC CE message, and send the target MAC CE message to the terminal.

In an example, among extended LTM cell switch command MAC CE messages sent by the network side device to the terminal, each extended LTM cell switch command MAC CE message only carries the access assistance information of a single candidate cell. The network side device may send multiple extended LTM cell switch command MAC CE messages to the terminal, and the terminal can obtain the access assistance information of multiple candidate cells.

In the embodiment, the network side device may extend the LTM cell switch command MAC CE message, and write the access assistance information of the candidate cell into the LTM cell switch command MAC CE message, and the network side sends the access assistance information of each cell related to network access to the terminal in advance depending on an LTM cell switch command, so that the terminal can access the network in time based on the locally stored access assistance information for the cell after determining that the conditional LTM switch is satisfied, thereby reducing the delay of network access of the terminal and ensuring timeliness of communication.

In an embodiment, the target MAC CE message is a newly configured MAC CE message, and the target MAC CE message includes the access assistance information of one candidate cell or pieces of access assistance information of multiple candidate cells.

The newly configured MAC CE message may be reconfigured by the network side device, and is not dependent on a communication message of any communication process. The target MAC CE message may be a newly configured RRC message, or the like. The network side device may perform a message configuration operation, write the access assistance information of a single candidate cell or pieces of access assistance information of multiple candidate cells into the newly configured MAC CE message to obtain the target MAC CE message, and send the target MAC CE message to the terminal.

In an example, each newly configured MAC CE message sent by the network side device to the terminal may carry the access assistance information of a single candidate cell or pieces of access assistance information of multiple candidate cells.

In the embodiment, the network side device may newly configure the MAC CE message, and write the access assistance information for the candidate cell into the newly configured MAC CE message, so that the network side can simultaneously send the access assistance information of multiple cells related to network access to the terminal in advance, thereby improving a sending efficiency of the access assistance information for the network, and further improving a performance.

A specific implementation process of the communication method in the foregoing embodiments is described in detail below with reference to specific embodiments.

In R18 LTM, when LTM switch is triggered, a network (network side device) sends a switch command MAC CE to UE, and the MAC CE carries access-related information (such as an uplink timing advance (TA)) of a target cell. Under the R19 mobility enhancement of the 3GPP, a terminal may support conditional LTM switch, and the conditional LTM switch is triggered by a terminal side (UE) while a network side does not send a command to trigger LTM switch. In the communication method according to the embodiments of the present disclosure, the UE may obtain the access-related information (such as the uplink timing advance (TA)) of the target cell in advance, that is, the network may provide the UE with access assistance information of a candidate cell before conditional LTM switch. Hence, after the conditional LTM switch is triggered, the terminal can access the target cell by using the access assistance information received in advance, thereby reducing a delay of the access to the network by the terminal.

L1/L2 triggered mobility (LTM) is introduced into NR mobility. That is, the network pre-configures LTM candidate cell configuration information and LTM L1 measurement configuration information for the UE; the UE performs L1 measurement of the candidate cell based on the LTM L1 measurement configuration information and reports an LTM L1 measurement result to the network; the network performs cell change decision based on the L1 measurement result information reported by the UE, and if the network determines that a cell change is necessary, the network sends a cell change command to the UE through an MAC CE, where the MAC CE carries identification information of the target cell; and when the UE receives the cell change MAC CE, the UE performs the cell change to access the target candidate cell.

As shown in FIG. 8, according to the 38.321 protocol, the LTM cell switch MAC CE may include the following information: target configuration identification (Target Config ID), an uplink access timing advance (TA) (Timing Advance Command), target cell beam information (SS/PBCH index), and a dedicated random access resource (Random Access Preamble index) of a target cell.

Optionally, in R19, the terminal can support conditional LTM switch. The UE can evaluate an execution condition of the conditional LTM and autonomously switch to the target cell when the execution condition is met.

In the communication method according to the embodiments of the present disclosure, the access assistance information of one or more candidate cells sent by the network can be received in advance by the terminal side in the case where the terminal side autonomously triggers the conditional LTM switch, thereby reducing the delay of the conditional LTM switch of the terminal.

In an embodiment, the network sends an extended LTM cell switch command MAC CE message to the UE, such message carries the access assistance information of a candidate cell.

In step 1, a serving cell sends the extended LTM cell switch command MAC CE message to the UE, which carries the access assistance information of the candidate cell. If the access assistance information of multiple candidate cells needs to be provided, the network sends multiple MAC CEs to the UE. The access assistance information may include the following information: cell identification information of the candidate cell, an uplink access timing advance (TA), beam information, a random access resource, and type indication information of the access assistance information. Optionally, the type indication information may be used to indicate to the terminal that the access assistance information is for providing the access assistance information of the candidate cell or the access assistance information of a target cell.

In step 2, the UE receives the MAC CE message(s) carrying the access assistance information of the candidate cell(s), and may locally store the access assistance information according to a use indication of the access assistance information.

In step 3, the UE evaluates an execution condition of LTM switch.

In step 4, if the UE determines that a candidate cell meeting the execution condition of the conditional LTM switch exists, the UE confirms the candidate cell meeting the execution condition of the conditional LTM switch as the target cell.

In step 5, if the UE determines that the target cell is one of the candidate cells whose access assistance information is received in step 2, the UE accesses the target cell using the locally stored access assistance information of the target cell.

In another embodiment, the network sends an extended LTM cell switch command MAC CE message to the UE, which carries the access assistance information of a candidate cell.

In step 1, a serving cell sends the extended LTM cell switch command MAC CE message to the UE, which carries the access assistance information for the candidate cell, If the access assistance information of multiple candidate cells needs to be provided, the network sends multiple MAC CEs to the UE. The access assistance information may include the following information: cell identification information of the candidate cell, an uplink access timing advance (TA), beam information, a random access resource, and type indication information of the access assistance information. Optionally, the type indication information may be used for instructing the terminal to perform a cell switch. Optionally, the type indication information may be used for instructing the terminal to perform a conditional LTM switch.

In step 2, the UE receives the access assistance information of a target cell, and executes a conditional LTM switch according to a use of the access assistance information to access the target cell.

In another embodiment, the network sends an extended LTM cell switch command MAC CE message to the UE, which carries access assistance information of a candidate cell and a corresponding use condition.

In step 1, a serving cell sends the extended LTM cell switch command MAC CE message to the UE. The message carries the access assistance information of the candidate cell. If the access assistance information of multiple candidate cells needs to be provided, the network sends multiple MAC CEs to the UE. The access assistance information may include the following information: cell identification information of the candidate cell, an uplink access timing advance (TA), beam information, a random access resource, and type indication information of the access assistance information; and the access assistance information may further include a use condition corresponding to the beam information and a use condition corresponding to the random access resource. For example, the type indication information may be used to provide the access assistance information of the candidate cell or the access assistance information of a target cell.

In step 2, the UE receives the MAC CE message carrying the access assistance information of the candidate cell, and locally stores the access assistance information according to a use indication of the access assistance information.

In step 3, the UE evaluates an execution condition of a conditional LTM switch.

In step 4, if the UE determines that a cell meeting the execution condition of the conditional LTM switch exists, the UE confirms the candidate cell meeting the execution condition of the conditional LTM switch as the target cell.

In step 5, if the UE determines that the target cell is one of the candidate cells whose access assistance information is received in step 2, the UE determines the uplink access timing advance (TA) in the access assistance information of the cell.

In step 6, the UE evaluates the beam information and the corresponding use condition to determine a beam meeting the use condition.

In step 7, the UE evaluates the random access resource and the corresponding use condition to determine the random access resource meeting the use condition.

In step 8, the UE accesses the target cell by using the uplink access timing advance (TA), the beam and the random access resource determined in the above steps.

In an embodiment, the network sends an MAC CE message to the UE, which carries the access assistance information of a candidate cell and a corresponding use condition. The MAC CE message may be a newly configured MAC CE message, which does not depend on any communication process, and the MAC CE message may include the access assistance information of one candidate cell or multiple candidate cells.

In step 1, a service cell sends the MAC CE message to the UE, which carries the access assistance information of one or more candidate cells, the access assistance information including: cell identification information of the candidate cell, an uplink access timing advance (TA), beam information, a random access resource, a use condition corresponding to the beam information, and a use condition corresponding to the random access resource.

In step 2, the UE receives the MAC CE message carrying the access assistance information of the candidate cell(s), and locally stores the access assistance information.

In step 3, the UE evaluates an execution condition of a conditional LTM switch.

In step 4, if the UE determines that a cell meeting the execution condition of the conditional LTM switch exists, the UE confirms the candidate cell meeting the execution condition of the conditional LTM switch as the target cell.

In step 5, if the UE determines that the target cell is one of the candidate cells receiving the access assistance information in step 2, the UE determines the uplink access timing advance (TA) in the access assistance information for the cell.

In step 6, the UE evaluates the beam information and the corresponding use condition to determine a beam meeting the use condition.

In step 7, the UE evaluates the random access resource and the corresponding use condition to determine the random access resource meeting the use condition.

In step 8, the UE accesses the target cell by using the uplink access timing advance (TA), the beam and the random access resource determined in the above steps.

In the communication method according to the embodiments of the present disclosure, the network provides the access assistance information for the candidate cell for the UE before the conditional LTM switch. After the conditional LTM switch is triggered, the UE accesses the target cell by using the received access assistance information, thus solving the problem that in the existing mechanism, before the conditional LTM switch, the UE cannot obtain the information (such as the uplink timing advance (TA)) of the target cell related to access, so that when the UE executes the conditional LTM switch, the UE can only execute a random access process on the target cell. The communication method according to the embodiments of the present disclosure can reduce the delay of the conditional LTM switch and further improve the switch efficiency.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple sub-steps or multiple stages, which are not necessarily performed at the same moment, but may be performed at different moments, and the sub-steps or the stages are not necessarily performed in sequence, but may be performed alternately with at least part of other steps or at least part of the sub-steps or the stages in other steps.

Based on the same inventive concept, embodiments of the present disclosure further provide a communication apparatus for implementing the above communication method. The implementation solution for solving problems provided by the apparatus is similar to the implementation solution described in the above method, and therefore, for the specific definitions in one or more embodiments of the communication apparatus provided below, reference can be made to the definitions of the communication method in the above description, and the definitions are not repeated herein.

In an embodiment, as shown in FIG. 9, there is provided a communication apparatus 900 which is applied to a terminal, including:
a first receiving unit 902, configured to receive a target message sent by a network side device, the target message including access assistance information, the access assistance information being used for assisting the terminal in performing cell access, and the access assistance information at least including cell identification information; and
a first processing unit 904, configured to perform a conditional LTM switch based on the access assistance information.

In some embodiments, the target message is a target MAC CE message, the access assistance information further includes type indication information, and the first processing unit is specifically configured to:
in a case of determining, based on the type indication information, that the access assistance information is for providing access assistance information of a candidate cell, store the access assistance information of the candidate cell locally; and
in a case where an access condition is met, perform the conditional LTM switch based on the locally stored access assistance information to access a target cell.

In some embodiments, the first processing unit is specifically configured to:
if the target cell meeting an execution condition of the conditional LTM switch exists and the access assistance information of the target cell is found locally, access the target cell based on the cell identification information and a communication parameter included in the access assistance information of the target cell, the communication parameter at least including one of an uplink access timing advance, beam information and a random access resource.

In some embodiments, the access assistance information further includes a use condition, and the first processing unit is specifically configured to:
determine a communication parameter meeting the use condition; and
access the target cell based on the identification information of the target cell and the communication parameter meeting the use condition.

In some embodiments, the use condition includes a use condition corresponding to a target communication parameter, and the target communication parameter includes the beam information and/or the random access resource.

In some embodiments, the first processing unit is further specifically configured to:
determine the uplink access timing advance included in the access assistance information of the target cell;
determine the target communication parameter meeting the use condition corresponding to the target communication parameter; and
access the target cell based on the cell identification information of the target cell, the uplink access timing advance, and the target communication parameter meeting the use condition corresponding to the target communication parameter.

In some embodiments, the communication parameter includes the uplink access timing advance, the beam information and the random access resource; the target communication parameter includes the beam information and the random access resource; and the first processing unit is specifically configured to:
determine the uplink access timing advance included in the access assistance information of the target cell;
determine the beam information meeting a use condition corresponding to the beam information;
determine the random access resource meeting a use condition corresponding to the random access resource; and
access the target cell based on the cell identification information of the target cell, the uplink access timing advance, the beam information meeting the use condition corresponding to the beam information, and the random access resource meeting the use condition corresponding to the random access resource.

In some embodiments, the use condition is a signal threshold-based use condition or a time threshold-based use condition.

In some embodiments, the target MAC CE message is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

In some embodiments, the target message is an extended LTM cell switch command MAC CE message, the target message includes access assistance information of a target cell, and the first processing unit is specifically configured to:
in a case of determining that the type indication information is for instructing the terminal to perform cell switch, access the target cell based on cell identification information and a communication parameter included in the access assistance information of the target cell.

In some embodiments, the target message is a newly configured MAC CE message, the target message includes access assistance information of a target cell, and the first processing unit is specifically configured to:
in a case of determining that the type indication information is for instructing the terminal to perform cell switch, access the target cell based on cell identification information and a communication parameter included in the access assistance information of the target cell.

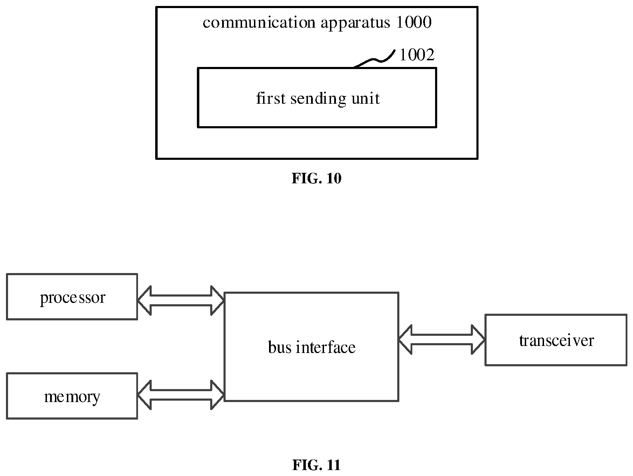

In an embodiment, as shown in FIG. 10, there is provided a communication apparatus 1000 which is applied to a network side device, including:
a first sending unit 1002, configured to send a target message, the target message including access assistance information, the access assistance information being used for assisting a terminal in performing cell access, and the access assistance information at least including cell identification information, to enable the terminal to perform a conditional LTM switch based on the access assistance information.

In some embodiments, the target message is a target MAC CE message, the target MAC CE message is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

It should be noted that the division of the units in the embodiment of the present disclosure is schematic, and is only logical function division, and there may be another division manner in actual implementation. In addition, functional units in the embodiments of the present disclosure may be integrated into one processing unit, or each of the units may exist alone physically, or two or more units are integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present disclosure essentially, or the part contributing to the related art, or all or a part of the technical solutions may be implemented in the form of a software product. The computer software product is stored in a storage medium and includes several instructions for instructing a computer device (which may be a personal computer, a server, or a network device) or a processor to perform all or a part of steps of the method described in the embodiment of the present disclosure.

It should be noted herein that the apparatus according to the embodiments of the present disclosure can implement all the method steps implemented in the method embodiments, and can achieve the same technical effects, and the same parts and beneficial effects of these embodiments as those of the method embodiment are not repeated herein.

In an exemplary embodiment, there is provided a communication apparatus, which may be a terminal device or a network device, an internal structure of which may be shown in FIG. 11. The communication apparatus includes a memory, a transceiver and a processor.

The transceiver is configured to receive and send data under control of the processor.

In FIG. 11, a bus architecture may include any number of interconnected buses and bridges, which specifically link various circuits of one or more processors represented by the processor and memories represented by the memory together. The bus architecture may also link together various other circuits such as peripherals, voltage regulators, and power management circuits, which are well known in the art, and therefore, will not be further described herein. A bus interface provides an interface. The transceiver may be a number of elements, that is, include a transmitter and a receiver, and provide a unit for communication with various other apparatuses over transmission media including wireless channels, wired channels, fiber optic cables, or the like. The processor is responsible for managing the bus architecture and general processing, and the memory may store data used when the processor performs operations.

The processor may be a central processing unit (CPU), an application specific integrated circuit (ASIC), a field-programmable gate array (FPGA), or a complex programmable logic device (CPLD), and may also adopt a multi-core architecture.

The processor is configured to execute any method according to the embodiment of the present disclosure according to obtained executable instructions by calling the program stored in the memory. The processor and the memory may be physically arranged separately.

It should be noted herein that the apparatus according to the embodiment of the present disclosure can implement all the method steps implemented in the method embodiment, and can achieve the same technical effects, and the same parts and beneficial effects of this embodiment as those of the method embodiment are not repeated herein.

The corresponding entity apparatus corresponding to the terminal device or network device is shown in FIG. 11, can implement all the method steps implemented in the method embodiments on the terminal device or network device side, and can achieve the same technical effects, and the same parts and beneficial effects of this embodiment as those of the method embodiment are not repeated herein.

It should be noted herein that the apparatus according to the embodiment of the present disclosure can implement all the method steps implemented in the method embodiment, and can achieve the same technical effects, and the same parts and beneficial effects of this embodiment as those of the method embodiment are not repeated herein.

In an exemplary embodiment, there is provided a communication device, which may be a terminal device, including: a memory for storing a computer program; a transceiver for transceiving data under control of a processor; and the processor for reading the computer program in the memory and performing the following operations:
receiving a target message sent by a network side device, the target message including access assistance information, the access assistance information being used for assisting the terminal in performing cell access, and the access assistance information at least including cell identification information; and performing a conditional LTM switch based on the access assistance information.

In some embodiments, the target message is a target MAC CE message, the access assistance information further includes type indication information, and the processor is configured to specifically perform the following operations:
in a case of determining, based on the type indication information, that the access assistance information is for providing access assistance information of a candidate cell, storing the access assistance information of the candidate cell locally; and
in a case where an access condition is met, performing the conditional LTM switch based on the locally stored access assistance information to access a target cell.

In some embodiments, the processor is further configured to specifically perform the following operation:
if the target cell meeting an execution condition of conditional LTM switch exists and access assistance information of the target cell is found locally, accessing the target cell based on cell identification information and a communication parameter included in the access assistance information of the target cell, the communication parameter at least including one of an uplink access timing advance, beam information and a random access resource.

In some embodiments, the access assistance information further includes a use condition, and the processor is configured to specifically perform the following operations:
determining the communication parameter meeting the use condition; and
accessing the target cell based on the identification information of the target cell and the communication parameter meeting the use condition.

In some embodiments, the use condition includes a use condition corresponding to a target communication parameter, and the target communication parameter includes the beam information and/or the random access resource.

In some embodiments, the processor is further configured to specifically perform the following operations:
determining the uplink access timing advance included in the access assistance information for the target cell;
determining the target communication parameter meeting the use condition corresponding to the target communication parameter; and
accessing the target cell based on the cell identification information of the target cell, the uplink access timing advance, and the target communication parameter meeting the use condition corresponding to the target communication parameter.

In some embodiments, the communication parameter includes the uplink access timing advance, the beam information and the random access resource, the target communication parameter includes the beam information and the random access resource, and the processor is further configured to specifically perform the following operations:
determining the uplink access timing advance included in the access assistance information for the target cell;
determining the beam information meeting a use condition corresponding to the beam information;
determining the random access resource meeting a use condition corresponding to the random access resource; and
accessing the target cell based on the cell identification information of the target cell, the uplink access timing advance, the beam information meeting the use condition corresponding to the beam information, and the random access resource meeting the use condition corresponding to the random access resource.

In some embodiments, the use condition is a signal threshold-based use condition or a time threshold-based use condition.

In some embodiments, the target MAC CE message is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

In some embodiments, the target message is an extended LTM cell switch command MAC CE message, the target message includes access assistance information of a target cell, and the processor is configured to specifically perform the following operation:
in a case of determining that the type indication information is for instructing the terminal to perform cell switch, accessing the target cell based on cell identification information and a communication parameter included in the access assistance information of the target cell.

In some embodiments, the target message is a newly configured MAC CE message, the target message includes access assistance information of a target cell, and the processor is configured to specifically perform the following operation:
in a case of determining that the type indication information is for instructing the terminal to perform cell switch, accessing the target cell based on cell identification information and a communication parameter included in the access assistance information of the target cell.

In an exemplary embodiment, there is provided a communication apparatus, which may be a network device. The communication apparatus includes: a memory for storing a computer program; a transceiver for transceiving data under control of a processor; and the processor for reading the computer program in the memory and performing the following operation:
sending a target message, where the target message includes access assistance information and the access assistance information at least includes cell identification information.

In some embodiments, the target message is a target MAC CE message, the target MAC CE message is an extended LTM cell switch command MAC CE message, and each target MAC CE message includes the access assistance information of one candidate cell.

In some embodiments, the target MAC CE message is a newly configured MAC CE message, and the target MAC CE message includes the access assistance information of one candidate cell or the access assistance information of multiple candidate cells.

In an embodiment, there is provided a processor-readable storage medium having a computer program stored thereon. The computer program, when executed by a processor, implements the steps of the above method embodiments.

In an embodiment, there is provided a computer program product including a computer program which, when executed by a processor, implements the steps in the above method embodiments.

The processor-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

Those skilled in the art may understand that the present disclosure may be embodied by a method, a system or a computer program product. Therefore, the present invention may be embodied completely by hardware, software or by a combination of software and hardware. In addition, the present invention may be embodied by a computer program product implemented in one or more computer available storage media including computer available program codes (including but not limited to a disk memory, an optical memory, etc.).

The present disclosure is described in conjunction with the flow chart and/or block diagram of the method, device (system) and computer program product according to the embodiments of the present disclosure. It should be understood that each flow and/or block of the flow chart and/or block diagram or a combination of each flow and/or block of the flow chart and/or block diagram may be implemented by the computer executable instructions. These computer executable instructions may be provided to a general purpose computer, a dedicated computer, an embedded processor or the processors of other programmable data processing devices to make a machine, so as to make the instructions performed by the processor of the computer or other programmable data processing devices produce an apparatus for implementing the functions prescribed in one or more flows in the flow chart and/or one or more blocks in the block diagram.

These processor executable instructions may further be stored in a processor readable memory capable of leading the computer or other programmable data processing devices to work in a specific manner, so that the instructions stored in the processor readable memory may produce an article of manufacture including an instruction apparatus, where the instruction apparatus implements the functions prescribed in one or more flows in the flow chart and/or one or more blocks in the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and equivalents thereof, the present disclosure also intends to include these modifications and variations.

Finally, it should be noted that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present disclosure, and all of them should be included in the scope of the claims and description of the present disclosure. Particularly, as long as structural conflicts do not exist, all technical features mentioned in all the embodiments may be combined together in any mode. The present disclosure is not limited to the specific embodiments disclosed in the description, but includes all technical solutions falling into the scope of the claims.

## Claims

1. A communication method, applied to a terminal, **characterized by** comprising:
receiving a target message sent by a network side device, wherein the target message comprises access assistance information, the access assistance information is used for assisting the terminal in performing cell access, and the access assistance information at least comprises cell identification information; and
performing a conditional L1/L2 triggered mobility, LTM, switch based on the access assistance information.

2. The communication method according to claim 1, wherein the target message is a target medium access control control element, MAC CE, message, the access assistance information further comprises type indication information, and the performing the conditional LTM switch processing based on the access assistance information comprises:
storing access assistance information of a candidate cell locally in response to determining, based on the type indication information, that the access assistance information is for providing the access assistance information of the candidate cell; and
performing the conditional LTM switch based on the locally stored access assistance information to access a target cell in a case where an access condition is met.

3. The communication method according to claim 2, wherein the access assistance information further comprises a communication parameter, and the performing the conditional LTM switch based on the locally stored access assistance information to access the target cell in the case where the access condition is met comprises:
accessing the target cell based on the cell identification information and the communication parameter comprised in the access assistance information of the target cell in a case where the target cell meeting an execution condition of the conditional LTM switch exists and the access assistance information of the target cell is found locally, wherein the communication parameter at least comprises one of an uplink access timing advance, beam information and a random access resource.

4. The communication method according to claim 3, wherein the access assistance information further comprises a use condition, and the accessing the target cell based on the cell identification information and the communication parameter comprised in the access assistance information of the target cell comprises:
determining the communication parameter meeting the use condition; and
accessing the target cell based on identification information of the target cell and the communication parameter meeting the use condition.

5. The communication method according to claim 4, wherein the use condition comprises a use condition corresponding to a target communication parameter, and the target communication parameter comprises the beam information and/or the random access resource.

6. The communication method according to claim 5, wherein the accessing the target cell based on the cell identification information and the communication parameter comprised in the access assistance information of the target cell comprises:
determining the uplink access timing advance comprised in the access assistance information of the target cell;
determining the target communication parameter meeting the use condition corresponding to the target communication parameter; and
accessing the target cell based on the cell identification information of the target cell, the uplink access timing advance, and the target communication parameter meeting the use condition corresponding to the target communication parameter.

7. The communication method according to claim 5, wherein the communication parameter comprises the uplink access timing advance, the beam information, and the random access resource, and the target communication parameter comprises the beam information and the random access resource;
wherein the accessing the target cell based on the cell identification information and the communication parameter comprised in the access assistance information of the target cell comprises:
determining the uplink access timing advance comprised in the access assistance information of the target cell;
determining the beam information meeting a use condition corresponding to the beam information;
determining the random access resource meeting a use condition corresponding to the random access resource; and
accessing the target cell based on the cell identification information of the target cell, the uplink access timing advance, the beam information meeting the use condition corresponding to the beam information, and the random access resource meeting the use condition corresponding to the random access resource.

8. The communication method according to any one of claims 4 to 7, wherein the use condition is a signal threshold-based use condition or a time threshold-based use condition.

9. The communication method according to any one of claims 2 to 7, wherein the target MAC CE message is an extended LTM cell switch command MAC CE message, and each target MAC CE message comprises the access assistance information of one candidate cell.

10. The communication method according to any one of claims 2 to 7, wherein the target MAC CE message is a newly configured MAC CE message, and the target MAC CE message comprises the access assistance information of one candidate cell or the access assistance information of a plurality of candidate cells.

11. The communication method according to claim 1, wherein the target message is an extended LTM cell switch command medium access control control element, MAC CE, message, the target message comprises the access assistance information of a target cell, the access assistance information further comprises a communication parameter and type indication information, and the performing the conditional LTM switch based on the access assistance information comprises:
accessing the target cell based on the cell identification information and the communication parameter comprised in the access assistance information of the target cell in a case of determining that the type indication information is for instructing the terminal to perform cell switch.

12. The communication method according to claim 1, wherein the target message is a newly configured medium access control control element, MAC CE, message, the target message comprises the access assistance information of a target cell, the access assistance information further comprises a communication parameter and type indication information, and the performing the conditional LTM switch based on the access assistance information comprises:
accessing the target cell based on the cell identification information and the communication parameter comprised in the access assistance information of the target cell in a case of determining that the type indication information is for instructing the terminal to perform cell switch.

13. A communication method, applied to a network side device, **characterized by** comprising:
sending a target message, wherein the target message comprises access assistance information, and the access assistance information at least comprises cell identification information.

14. The communication method according to claim 13, wherein the target messages is a target medium access control control element, MAC CE, message, the target MAC CE message is an extended L1/L2 triggered mobility, LTM, cell switch command MAC CE message, and each target MAC CE message comprises the access assistance information of one candidate cell.

15. The communication method according to claim 13, wherein the target MAC CE message is a newly configured medium access control control element, MAC CE, message, and the target MAC CE message comprises the access assistance information of one candidate cell or the access assistance information of a plurality of candidate cells.

16. A communication apparatus, applied to a terminal, **characterized by** comprising:
a first receiving unit, configured to receive a target message sent by a network side device, wherein the target message comprises access assistance information, the access assistance information is used for assisting the terminal in performing cell access, and the access assistance information at least comprises cell identification information; and
a first processing unit, configured to perform a conditional L1/L2 triggered mobility, LTM, switch based on the access assistance information.

17. A communication apparatus, applied to a network side device, **characterized by** comprising:
a first sending unit, configured to send a target message, wherein the target message comprises access assistance information, the access assistance information is used for assisting a terminal in performing cell access, and the access assistance information at least comprises cell identification information, to enable the terminal to perform a conditional L1/L2 triggered mobility, LTM, switch based on the access assistance information.

18. A communication apparatus, comprising a memory, a transceiver and a processor, **characterized in that** the memory is configured to store a computer program, the transceiver is configured to transceive data under control of the processor, and the processor is configured to read the computer program in the memory and perform:
receiving a target message sent by a network side device, wherein the target message comprises access assistance information, the access assistance information is used for assisting a terminal in performing cell access, and the access assistance information at least comprises cell identification information; and
performing a conditional L1/L2 triggered mobility, LTM, switch based on the access assistance information.

19. The communication apparatus according to claim 18, wherein the target message is a target medium access control control element, MAC CE, message, the access assistance information further comprises type indication information, and the processor is configured to perform:
storing access assistance information of a candidate cell locally in response to determining, based on the type indication information, that the access assistance information is for providing the access assistance information of the candidate cell; and
performing the conditional LTM switch based on the locally stored access assistance information to access a target cell in a case where an access condition is met.

20. The communication apparatus according to claim 19, wherein the access assistance information further comprises a communication parameter, and the processor is further configured to perform:
accessing the target cell based on the cell identification information and the communication parameter comprised in the access assistance information of the target cell in a case where the target cell meeting an execution condition of the conditional LTM switch exists and the access assistance information of the target cell is found locally, wherein the communication parameter at least comprises one of an uplink access timing advance, beam information and a random access resource.

21. The communication apparatus according to claim 20, wherein the access assistance information further comprises a use condition, and the processor is further configured to perform:
determining the communication parameter meeting the use condition; and
accessing the target cell based on identification information of the target cell and the communication parameter meeting the use condition.

22. The communication apparatus according to claim 18, wherein the target message is an extended LTM cell switch command MAC CE message, the target message comprises the access assistance information of a target cell, the access assistance information further comprises a communication parameter and type indication information, and the processor is configured to perform:
accessing the target cell based on the cell identification information and the communication parameter comprised in the access assistance information of the target cell in a case of determining that the type indication information is for instructing the terminal to perform cell switch.

23. A communication apparatus, comprising a memory, a transceiver and a processor, **characterized in that** the memory is configured to store a computer program, the transceiver is configured to transceive data under control of the processor, and the processor is configured to read the computer program in the memory and perform:
sending a target message, wherein the target message comprises access assistance information, and the access assistance information at least comprises cell identification information.

24. The communication apparatus according to claim 23, wherein the target message is a target medium access control control element, MAC CE, message, the target MAC CE message is an extended L1/L2 triggered mobility, LTM, cell switch command MAC CE message, and each target MAC CE message comprises the access assistance information of one candidate cell.

25. The communication apparatus according to claim 23, wherein the target MAC CE message is a newly configured MAC CE message, and the target MAC CE message comprises the access assistance information of one candidate cell or the access assistance information of a plurality of candidate cells.

26. A computer-readable storage medium, which stores a computer program thereon, **characterized in that** the computer program, when executed by a processor, implements the steps of the communication method according to any one of claims 1 to 12 or any one of claims 13 to 15.
